# DEMANDE DE BREVET EUROPEEN

(11) **EP 2 583 988 A1**
(43) Date de publication de la demande: **24.04.2013**
(21) Numéro de dépôt: 12189280.6
(22) Date de dépôt: 19.10.2012
(51) Int. Cl.: C08G 18/10, C08G 18/12, C08L 75/04, C09J 175/04, C08L 97/00, C08L 97/02

(54) **Composition adhésive de polyuréthanne pour la fabrication d'agglomérés**

(30) Priorité: 21.10.2011 FR 1159588
(71) Demandeur: Bostik SA, 92400 Courbevoie (FR)
(72) Inventeur: Laferte, Olivier, 60350 TROSLY-BREUIL (FR); Guillotte, Régis, 60170 RIBECOURT DRESLINCOURT (FR)
(74) Mandataire: Granet, Pierre

(57) **Abrégé**

1) Composition adhésive réticulable à chaud comprenant:
(a) de 5 à 60 % d'un polyuréthanne à groupe terminal silyl obtenu par :
(i) polyaddition d'un polyéther polyol avec un excès d'un diisocyanate, pour former un polyuréthanne avec 2 groupes terminaux -NCO ; puis
(ii) réaction avec un aminosilane (E) ; et

(b) de 40 à 95 % de particules solides d'une matière organique, notamment de liège.

2) Procédé de fabrication d'un article en aggloméré comprenant la mise en forme de ladite composition adhésive puis sa réticulation par chauffage en présence d'eau.
3) Article correspondant, incluant un bouchon.

## Description

La présente invention a pour objet une composition adhésive de polyuréthanne réticulable à chaud et un procédé de fabrication d'un article constitué d'un aggloméré de particules solides à base dudit polyuréthanne réticulé. Elle concerne également un article susceptible d'être obtenu à partir dudit procédé, et qui convient au contact alimentaire. Elle a notamment pour objet un article constitué d'un aggloméré de particules de liège utilisable pour la fabrication de bouchons.

On connaît déjà des agglomérés de particules solides comprenant une composition réticulée obtenue à partir d'un polyuréthanne.

Ainsi, la demande WO 92/12848 décrit un aggloméré de particules de liège qui présente des propriétés mécaniques avantageuses, notamment d'élasticité, convenant à une utilisation comme bouchon. De tels bouchons sont fabriqués par un procédé de moulage à une température d'environ 90 à 200 °C, d'une composition réticulable à chaud qui comprend :
- des particules de matière végétale ligneuse, notamment de liège, et
- un polyuréthanne en tant que liant assurant la cohésion du bouchon.

Ces bouchons synthétiques ont un aspect extérieur très similaire aux bouchons en liège naturel, et possèdent des caractéristiques physiques également voisines, en particulier en ce qui concerne leur compressibilité ou élasticité. Ils conviennent ainsi par exemple au bouchage des bouteilles de vin.

Le polyuréthanne mis en oeuvre pour la fabrication de tels bouchons est généralement un prépolymère polyuréthanne à terminaisons -NCO, ayant un poids moléculaire d'environ 10 à 30 kDa, qui est généralement obtenu par une réaction de polyaddition d'un polyéther polyol avec un diisocyanate de faible masse moléculaire. Sous l'effet de la température élevée de l'étape de moulage, ledit prépolymère réagit avec l'eau (présente en très petite quantité dans la composition du fait de l'hygrométrie naturelle des particules de liège) selon une réaction de réticulation des groupements terminaux isocyanates, pour former un réseau tridimensionnel à liaison uréthanne et/ou urée, qui agglomère les particules de liège et autres ingrédients éventuels de la composition, en un bouchon solide, cohésif et d'aspect homogène.

Toutefois, un inconvénient du liant polyuréthanne mentionné précédemment est qu'il contient des quantités résiduelles, pouvant aller jusqu'à 1 % en poids, de monomères diisocyanates non réagis durant leur réaction de condensation avec les polyéthers polyols. Ces diisocyanates de faible masse moléculaire sont susceptibles de réagir avec de l'eau présente durant la fabrication de l'aggloméré pour former, dans le bouchon, des traces d'amines primaires de nature aromatique ou aliphatique selon le monomère diisocyanate utilisé. De telles traces dans un aggloméré susceptible d'être au contact d'un produit alimentaire peuvent représenter, notamment dans le cas des amines aromatiques, un certain risque toxicologique pour les consommateurs, qu'il est toujours désirable de diminuer, voire de supprimer totalement.

La présente invention a pour but de proposer un article constitué d'un aggloméré de particules solides à base d'un liant polyuréthanne réticulé, qui remédie à cet inconvénient.

Un autre but de l'invention est de proposer une composition réticulable à base d'un polyuréthanne, convenant à la fabrication dudit article, lequel présente un risque toxicologique diminué lors d'un contact alimentaire.

Un autre but de l'invention est de proposer :
- un article constitué d'un aggloméré de particules de liège à base d'un liant polyuréthanne réticulé, qui offre en outre des propriétés avantageuses de cohésion, d'homogénéité d'aspect et de compressibilité/élasticité, le rendant apte à son utilisation comme bouchon, et
- une composition réticulable comprenant un polyuréthanne, qui convient à la fabrication dudit article.

Il a à présent été trouvé que ces buts peuvent être atteints, en totalité ou en partie, au moyen notamment de la composition adhésive réticulable à chaud qui est décrite ci-après en tant que premier objet de l'invention.

L'invention concerne donc tout d'abord une composition adhésive réticulable à chaud comprenant:
(a) de 5 à 60 % d'un liant constitué par un polyuréthanne à groupe terminal silyl (A) obtenu par le procédé comprenant les étapes séquentielles :
   - (i) de polyaddition d'une composition comprenant un polyéther polyol (B) avec un excès d'un diisocyanate (C), de manière à former un polyuréthanne (D) possédant au moins 2 groupes terminaux -NCO ; puis
   - (ii) de réaction du produit de l'étape (i) avec une quantité stoechiométrique ou en excès d'un α, β ou γ aminosilane (E) ; et
(b) de 40 à 95 % de particules solides d'une matière organique.

Cette composition adhésive réticulable conduit avantageusement après réticulation à chaud à un article en aggloméré homogène et offrant une excellente cohésion.

De plus, au cours de l'étape (ii) du procédé, l'aminosilane (E) introduit réagit, selon une réaction quantitative, avec la quantité résiduelle du diisocyanate (C) non réagie à la fin de l'étape (i), pour former le dérivé silanisé dudit isocyanate.

Durant la mise en oeuvre de la composition selon l'invention pour la fabrication d'un aggloméré de particules solides, ledit dérivé participe à la réaction de réticulation du polyuréthanne silylé (A), et est donc relié par une liaison chimique au réseau tridimensionnel à liaison siloxane qui relie les chaînes du polyuréthanne (A).

Il en résulte que l'on évite ainsi le risque, mentionné précédemment, de formation dans l'aggloméré d'amines primaires potentiellement toxiques.

Les teneurs des ingrédients (a) et (b) compris dans la composition selon l'invention sont indiquées dans le présent texte en pourcentages poids/poids et sont des pourcentages relatifs au poids total de ladite composition. Il en est de même pour tous les constituants des compositions mentionnées dans le présent texte.

On décrit à présent le procédé d'obtention du polyuréthanne à groupe terminal silyl (A).

Dans une première étape (i), on fait donc réagir un (ou plusieurs) polyéther polyol (B) avec un excès d'un diisocyanate (C), de manière à former un polyuréthanne (D) possédant au moins 2 groupes terminaux -NCO.

Les polyéthers polyols (B) sont généralement choisis parmi les polyéthers polyols aliphatiques et aromatiques. De préférence, leur masse moléculaire est comprise entre 0,5 et 20 kDa et leur fonctionnalité hydroxyle est comprise entre 2 et 4,6. La fonctionnalité hydroxyle est le nombre moyen de fonctions hydroxyles par mole de polyéther polyol. La masse moléculaire indiquée est une masse moléculaire moyenne en nombre (généralement notée Mn) ; il en est de même pour toutes les masses moléculaires indiquées pour des polymères dans le présent texte, en l'absence d'indication contraire.

A titre d'exemples de polyéthers polyols aliphatiques, on peut citer les dérivés oxyalkylés de :
- diols (tels que l'éthylène glycol, le propylène glycol, le néopentyl glycol), de
- triols (tels que le glycérol , le triméthylolpropane et l'hexane-1,2,6-triol), ou de
- tétrols (tels que le pentaérythritol).

Ces produits sont largement disponibles dans le commerce.

Selon une variante préférée, le polyéther polyol (B) de la composition mise en oeuvre dans l'étape (i) est un polyéther diol seul ou en mélange, et notamment un polypropylène glycol.

On choisit, selon une variante de réalisation, le polyéther polyol (B) parmi les polypropylène glycols (ou PPG) de fonctionnalité hydroxyle égale à 2 et de masse moléculaire environ 4000 Da.

Selon une autre variante particulièrement avantageuse en raison de l'abaissement de la viscosité du polyuréthanne (A) qui en résulte, on utilise comme polyéther diol (B) un polypropylène glycol dont l'indice de polymolécularité (Pm) varie de 1 à 1,4.

L'indice de polymolécularité (Pm) est le rapport de la masse moléculaire moyenne en poids à la masse moléculaire moyenne en nombre. De tels polypropylène glycols sont disponibles commercialement sous la marque ACCLAIM^{®} auprès de la société Bayer. On peut citer comme exemples de PPG difonctionnels :
- l'ACCLAIM^{®} 4200 de masse moléculaire 4000 Da
- l'ACCLAIM^{®} 8200 de masse moléculaire 8000 Da
- l'ACCLAIM^{®} 12200 de masse moléculaire 12000 Da
- l'ACCLAIM^{®} 18200 de masse moléculaire 18000 Da.

La composition comprenant le polyéther polyol (B) mise en oeuvre dans l'étape (i) peut renfermer en outre un (ou plusieurs) allongeur de chaîne, choisi parmi les diols et les polyamines de masse moléculaire comprise entre 60 et 500 Da.

A titre d'illustration de tels diols, on citera l'éthylène glycol, le propylène glycol, le diéthylène glycol, le di propylène glycol, méthyl-3 propane diol-1,5, le 1,4-butanediol, le 1,6-hexanediol, le 2-éthyl-1,3 hexanediol, le N,N bis(hydroxy-2 propyl)aniline, le 3-méthyl-1,5-pentanediol.

A titre d'illustration de telles polyamines, on citera l'éthylène diamine, la diphényl méthane diamine, l'isophorone diamine, l'hexaméthylène diamine, la diéthyltoluène diamine.

Conformément à l'étape (i) du procédé selon l'invention, on fait réagir au moins un polyéther polyol (B) décrit précédemment avec un (ou plusieurs) diisocyanate (C) de formule :

NCO-R¹-NCO (I)

dans laquelle R¹ représente un radical divalent aliphatique ou aromatique hydrocarboné comprenant de 5 à 15 atomes de carbone qui peut être linéaire, ramifié ou cyclique.

R¹ est avantageusement choisi parmi l'un des radicaux divalents suivants dont les formules ci-dessous font apparaître les 2 valences libres :
- a) le radical divalent dérivé de l'isophorone : 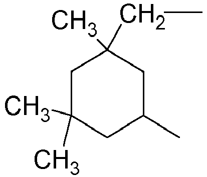
- b) 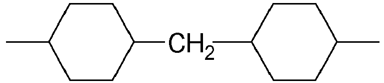
- c)
   -(CH₂)₆- (ou radical hexaméthylène)
- d) 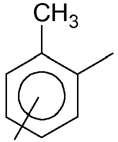
- e)

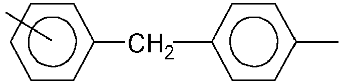

De tels diisocyanates sont couramment disponibles dans le commerce.

Un diisocyanate (C) de formule (I) dans laquelle R¹ est un radical aliphatique est préféré, et est particulièrement avantageux le diisocyanate de formule (I) dans laquelle R¹ est le radical a) divalent dérivé de l'isophorone, dénommé IsoPhorone DiIsocyanate (ou IPDI).

Dans la présente étape (i) du procédé selon l'invention, on fait réagir le polyéther polyol (B) avec un excès, en terme de groupe fonctionnel équivalent, du diisocyanate (C), de formule (I). Cela signifie que les quantités des 2 réactifs mises en oeuvre dans l'étape (i) correspondent à un excès du nombre total équivalent de groupes -NCO (présents dans la quantité d'isocyanate) par rapport au nombre total équivalent de groupes -OH (présents dans la quantité de polyéther(s) polyol(s) (B)) augmenté, le cas échéant, du nombre équivalent des groupes -OH, -NH₂, et/ou -NH- présents dans le diol et/ou la diamine utilisés comme allongeur de chaîne.

De préférence, ces quantités correspondent à un rapport équivalent -NCO/-OH allant de 1 à 4, de préférence de 1,5 à 3.

Ledit rapport est défini comme étant égal au nombre total équivalent de groupes - NCO divisé par le nombre total équivalent de groupes -OH, -NH₂, et/ou -NH- s'agissant des groupes fonctionnels portés par les quantités correspondantes des 2 réactifs, à savoir le (ou les) diisocyanate d'une part et d'autre part la composition consistant des polyéthers polyols (B) et, le cas échéant, d'un allongeur de chaîne. Les quantités pondérales des réactifs à charger dans le réacteur sont déterminées sur la base de ce rapport, ainsi que, s'agissant du polyéther polyol (B), sur son indice d'hydroxyle I_{OH}. L'indice d'hydroxyle I_{OH} est le nombre de fonctions hydroxyle par gramme de polyéther polyol déterminé par dosage chimique, le dit nombre étant exprimé, en particulier dans le présent texte, sous la forme du nombre équivalent de milligrammes de KOH utilisés dans ledit dosage.

Lorsque le diisocyanate (C) de formule (I) est tel que R¹ est un radical aliphatique, l'étape (i) est réalisée en présence d'un catalyseur choisi par exemple parmi les sels organométalliques tels que les sels ou complexes organométalliques du plomb, du cobalt, du fer, du nickel, du titane, du bismuth, du zinc et de l'étain, comme par exemple le dilaurate de dibutyl étain (ou DBTL), le tétraisopropylate de titane ou les carboxylates de bismuth/zinc.

Quel que soit le diisocyanate (C), la quantité appropriée correspondante est introduite dans la quantité appropriée de polyéther(s) polyol(s) (B) qui est chargée au préalable dans le réacteur correspondant à l'étape (i), ladite étape étant mise en oeuvre à une température comprise entre 50 et 100°C.

Conformément à l'étape (ii) du procédé selon l'invention, le produit formé à l'issue de l'étape (i) est réagi avec un α, β ou γ aminosilane (E) de formule :

R²-NH-CH₂-(CHR³)ₘ-(CH₂)ₙ-SiR⁴R⁵R⁶ (II)

dans laquelle :
- R² et R³, identiques ou différents, représentent un atome d'hydrogène ou un radical hydrocarboné aliphatique ou aromatique C₁-C₁₀ qui peut être linéaire, ramifié ou cyclique ;
- R⁴ représente un radical alkyle C₁-C₁₀, linéaire ou ramifié, ou a la même signification que R⁵ ou R⁶ ;
- R⁵ et R⁶, identiques ou différents, représentent un radical alkoxy linéaire ou ramifié C₁-C₈ ou un radical acyloxy C₁-C₈;
- m et n, identiques ou différents, représentent un nombre entier égal à 0 ou 1.

Un aminosilane (E) de formule (II) de type α (correspondant à m=n=0) ou γ (correspondant à m=n=1) est préféré, en raison de sa disponibilité au plan commercial.

On préfère encore un aminosilane (E) de formule (II) dans laquelle :
- R² représente un atome d'hydrogène ou un radical C₁-C₆ alkyle ou C₃-C₆ cycloalkyle ;
- R³ représente un atome d'hydrogène ;
- R⁴ représente un groupe choisi parmi : Me, Et, OMe, OEt, et
- R⁵ et R⁶ représentent un groupe OMe ou OEt.

On peut citer comme exemples de tels composés :
- l' α-aminosilane de formule : 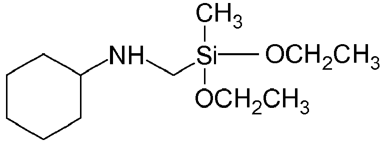 de masse molaire 245,5 g, disponible auprès de la société Wacker Chemie AG sous la dénomination Geniosil^{®} XL 924 ;
- l' α-aminosilane de formule : 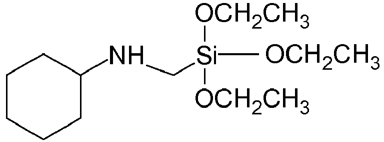 de masse molaire 275,5 g, disponible auprès de la société Wacker Chemie AG sous la dénomination Geniosil^{®} XL 926 ;
- le γ-aminosilane de formule :
   nBu-NH-(CH₂)₃-Si(OMe)₃
   de masse molaire 235 g, disponible auprès de la société Evonik Degussa sous la dénomination Dynasylan^{®} 1189 ;
- le γ-aminosilane de formule :
   NH₂-(CH₂)₃-Si(OMe)₃
   de masse molaire 179,3 g, disponible auprès de la société Momentive sous la dénomination Silquest-A1110^{®}; et
- le γ-aminosilane de formule :
   NH₂-(CH₂)₃-Si(OEt)₃
   de masse molaire 221,1 g, disponible auprès de la société Momentive sous la dénomination Silquest-A1100^{®}.

Selon une variante tout particulièrement préférée de l'invention, l'aminosilane (E) est un γ-aminosilane (correspondant à m=n=1 dans la formule (II)). Le polyuréthanne à groupe terminal silyl (A) correspondant présente en effet, du fait d'une moindre sensibilité à l'humidité, une stabilité au stockage largement améliorée par rapport à celle obtenue avec le polyuréthanne de l'art antérieur. Ce dernier en effet, du fait de son instabilité, doit être stocké et transporté dans un container hermétiquement fermé, avec une durée de conservation à température ambiante limitée à environ 6 mois. La durée de conservation correspondant au polyuréthanne à groupe terminal silyl (A) obtenu au moyen d'un γ-aminosilane (E) est, au contraire, supérieure à 12 mois. Cette amélioration de la stabilité est également avantageuse au plan de la logistique de la production industrielle de l'aggloméré de particules solides, dans la mesure où la composition adhésive réticulable à chaud selon l'invention peut être, une fois préparée par mélange de ses ingrédients, conservée jusqu'à 1 jour à température ambiante avant sa mise en forme par moulage à chaud.

Un γ-aminosilane de formule (II) dans laquelle R⁴, R⁵ et R⁶ représentent chacun un groupe OEt est encore plus préféré pour la stabilité à l'humidité encore améliorée du polyuréthanne (A) correspondant.

Le produit de l'étape (i) comprend, outre le polyuréthanne (D), une quantité résiduelle de monomère diisocyanate (C) non réagi allant jusqu'à 1 % en poids (sur la base du poids dudit produit).

La quantité d'aminosilane (E) qui est mise à réagir avec le produit de l'étape (i), dans la présente étape (ii), correspond avantageusement à un rapport nombre de moles équivalent - NCO/nombre de moles de (E) allant de 0,95 à 1.

Pratiquement, la quantité correspondante d'aminosilane (E) introduite dans le réacteur est calculée à partir du nombre de moles de groupes -NCO compris dans le produit formé à l'issue de l'étape (i). Ce nombre, qui est calculé et/ou déterminé par analyse du produit de l'étape (i), comprend donc les groupes -NCO terminaux du polyuréthanne (D) et les groupes -NCO de l'isocyanate monomère (C) non réagi à l'étape (i). L'excès d'aminosilane (E) assure la réaction de toutes les fonctions NCO présentes dans le produit formé à l'étape (i), y compris celles de l'isocyanate monomère (C) non réagi durant la réaction de polycondensation de l'étape (i).

L'étape (ii) est généralement conduite à une température allant de 40 à100 °C.

On obtient, à l'issue de la présente étape (ii), le polyuréthanne à groupe terminal silyl (A) qui est mis en oeuvre dans la composition adhésive réticulable à chaud selon la présente invention.

Ledit polyuréthanne (A) se présente sous la forme d'un liquide visqueux ayant une viscosité (mesurée à 23°C par viscosimètre Brookfield) comprise dans un domaine allant de 20 à 300 Pa.s.

On préfère, notamment pour sa facilité de mise en oeuvre, une composition dans laquelle le polyuréthanne (A) présente une viscosité Brookfield mesurée à 23°C inférieure à 100 Pa.s.

En vue de son utilisation ultérieure dans la composition adhésive réticulable à chaud selon l'invention, le polyuréthanne (A) peut être transporté et stocké à température ambiante dans des récipients hermétiquement fermés, généralement des fûts ou des containers. Il peut également être commodément transvasé à partir de ces récipients par simple chauffage, par exemple au moyen d'un vide fût à plateau chauffant.

La composition adhésive réticulable à chaud selon l'invention comprend, outre le polyuréthanne à groupe terminal sily (A), des particules solides d'une matière organique destinées à être agglomérées dans le procédé selon l'invention décrit ci-après.

Les dites particules ont une taille très variable, généralement comprise dans un domaine très large pouvant aller de 1 µm à 15 mm.

Toute matière organique d'origine naturelle, artificielle ou synthétique dont l'agglomération peut présenter un intérêt est utilisable dans la composition selon l'invention.

Selon un mode de réalisation préféré de l'invention, on utilise une matière organique dont la température de fusion est supérieure à 150°C, de préférence supérieure à 200°C.

On peut citer notamment :
- une matière végétale ligneuse comme par exemple une poudre fine de particules de bois (également dénommée farine de bois) dont la taille de particules est inférieure à 1 mm, ou des particules de liège dont la taille peut varier de 100 µm à 8 mm ;
- une matière à propriété élastomère comme le caoutchouc naturel, synthétique, ou issu de recyclage comprenant des particules non sphériques de forme irrégulière, de taille comprise entre 1 et 12 mm.

La composition adhésive selon l'invention comprend, de préférence, de 5 à 50 % de polyuréthanne (A) et de 50 à 95 % de particules solides de matière organique.

Selon une variante particulièrement préférée de la composition selon l'invention, qui est à présent décrite plus en détail, les particules de matière organique sont des particules de liège. L'article en aggloméré obtenu à partir de cette composition présente, outre un risque toxicologique diminué lors d'un contact alimentaire, des propriétés avantageuses de compressibilité/élasticité, de nature à permettre son utilisation comme bouchon susceptible d'entrer en contact avec la boisson contenue dans la bouteille, notamment avec du vin.

Conformément à cette variante, la composition adhésive réticulable à chaud comprend :
(a) de 15 à 50 % du polyuréthanne à groupe terminal silyl (A) ;
(b) de 40 à 80 % de particules de liège ; et
(c) de 0 à 20 % d'une matière plastique à structure alvéolaire fermée.

Selon une variante encore plus préférée, la composition comprend de 30 à 35 % du polyuréthanne à groupe terminal silyl (A), de 60 à 70 % de particules de liège et de 0 à 8 % de matière plastique à structure alvéolaire fermée.

La matière plastique à structure alvéolaire fermée (c) est principalement constituée par une matière choisie parmi un polymère ou copolymère de chlorure de vinyle, un polymère ou copolymère de chlorure de vinylidène, un copolymère de chlorure de vinyle et d'acrylonitrile, un terpolymère de chlorure de vinylidène, d'acrylonitrile et de méthacrylate de méthyle, et/ou un copolymère de styrène et d'acrylonitrile, un copolymère d'éthylène et d'acétate de vinyle.

De préférence, ladite matière plastique à structure alvéolaire fermée est principalement constituée de microsphères d'un copolymère de méthacrylate de méthyle et d'acrylonitrile.

La dimension moyenne des alvéoles de ladite structure, notamment des microsphères, est inférieure à 1 mm et de préférence comprise entre 10 µm et 200 µm, de sorte que lesdites alvéoles sont susceptibles de contenir un fluide liquide ou gazeux constituant un agent d'expansion desdites alvéoles, qui sont donc ainsi expansibles et/ou compressibles. Lesdites alvéoles peuvent être présentes dans la composition adhésive réticulable à chaud selon l'invention, sous leur forme expansible ou expansée, la forme expansible étant plus particulièrement préférée.

La matière plastique à structure alvéolaire fermée est décrite dans la demande de brevet WO 92/12848 pré-citée. Parmi les produits correspondants qui sont commercialement disponibles, on peut citer les microsphères Expancel^{®} 053 DU 40 de la société AKZO NOBEL.

La composition selon cette même variante préférée comprenant des particules de liège, peut également comprendre des agents plastifiants comme les phtalates, les benzoates, les huiles végétales époxydées, des polyols tels que les polypropylène glycols, des agents de stabilisation aux UV, des agents antioxydants, des promoteurs d'adhésion et/ou des agents rhéologiques et éventuellement un catalyseur de réticulation.

On peut utiliser tout catalyseur connu par l'homme du métier pour la condensation de silanol. On peut citer comme exemples de tels catalyseurs :
- des dérivés organiques du titane comme l'acétylacétonate de titane (disponible commercialement sous la dénomination TYZOR^{®} AA75 auprès de la société DuPont),
- des dérivés organiques de l'aluminium comme le chélate d'aluminium (disponible commercialement sous la dénomination K-KAT^{®} 5218 auprès de la société King Industries),
- des dérivés organiques de l'étain comme le dilaurate de dibutyle étain (ou DBTL) ou encore le dinéodécanoate de dioctyle étain (disponible par exemple sous la dénomination TIB KAT^{®} 223 auprès de la société TIB Chemicals),
- des amines comme le 1,8-diazobicyclo (5.4.0) undécène-7 ou DBU.

La composition adhésive réticulable à chaud selon l'invention qui se présente sous la forme d'une pâte d'apparence hétérogène est préparée par simple mélange de ses ingrédients, à une température comprise entre 23 et 80°C, au moyen de mélangeurs connus en soi et adaptés au malaxage et à l'homogénéisation de produits pâteux.

La présente invention a également pour objet un procédé de fabrication d'un article constitué d'un aggloméré de particules solides organiques à base d'un liant polyuréthanne réticulé comprenant:
- la mise en forme de la composition adhésive réticulable à chaud telle que définie précédemment, puis
- sa réticulation par chauffage en présence d'eau à une température comprise entre 100 et 150°C.

La mise en forme de la composition est effectuée par son simple transvasement, après mélange de ses ingrédients, dans un moule ayant la forme désirée pour l'article.

Selon la nature des particules solides et l'utilisation désirée pour l'article en aggloméré correspondant, il est possible d'adopter les formes les plus variées. Ainsi une forme de plaque rectangulaire de grande longueur et largeur, et de faible épaisseur, est utilisée pour la fabrication de panneaux de particules de liège, ou de tapis d'agglomérés de particules de matière élastomérique, en vue d'une utilisation comme revêtement absorbant pour les aires récréatives destinées aux enfants.

Lorsque les particules solides sont constituées de liège, la forme préférée pour le moule est cylindrique, notamment en vue de la fabrication de bouchons synthétiques, bien qu'une forme de plaque rectangulaire soit également possible en vue de la fabrication de panneaux de liège pour le domaine de l'isolation ou la décoration.

Durant l'étape de chauffage de la composition moulée, le polyuréthanne silylé (A) réagit avec l'eau selon une réaction de réticulation des 2 groupements terminaux silyl hydrolysables, pour former un réseau tridimensionnel à liaison siloxane, qui agglomère les particules solides et les autres ingrédients de la composition pour former un article constitué d'un aggloméré cohésif et d'aspect homogène.

L'eau nécessaire à la réaction de réticulation est soit déjà présente dans les particules solides (comme les particules de liège) sous la forme d'humidité résiduelle, soit introduite dans le milieu réactionnel. Une quantité allant de 0,01 à 5 % poids/poids (sur la base du poids total de la composition adhésive réticulable selon l'invention) est en général appropriée.

La durée durant laquelle il est nécessaire de chauffer la composition adhésive réticulable à chaud pour obtenir sa réticulation dépend des modalités pratiques du chauffage et de la quantité de composition concernée. Cette durée peut donc varier en pratique dans un large domaine, comme par exemple de 10 mn à 2 heures.

L'invention concerne également l'article susceptible d'être obtenu par le procédé tel que défini précédemment.

Est plus particulièrement préféré un article dans lequel les particules solides de matière organique de la composition adhésive qui est mise en oeuvre pour son procédé d'obtention sont des particules de liège.

L'invention concerne également l'utilisation dudit article comme bouchon.

La composition selon l'invention est à présent illustrée par les exemples suivants qui sont donnés de manière non limitative de sa portée.

### Exemple 1 : Article en aggloméré de particules de liège

### 1.1. Préparation du polyuréthanne à groupe terminal silyl (A) :

### Etape (i) : préparation d'un polyuréthanne (D) à groupes terminaux -NCO :

On utilise :
- comme polyéther polyol (B) l'ACCLAIM^{®} 8200 ayant un indice d'hydroxyle I_{OH} égal à 14 mg KOH par g (correspondant à un nombre équivalent de fonction -OH égal à 0,250 mmol par g), et
- comme diisocyanate (C) un IPDI titrant 37,6 % poids/poids en groupe -NCO (correspondant à un nombre équivalent de fonctions -NCO égal à 8,95 mmol par g).

Dans un réacteur fermé de 250 ml, équipé d'une agitation, de moyens de chauffe, d'un thermomètre et relié à une pompe à vide, on introduit 85,52 g de polyéther polyol (B) (soit : 21,3 mmol en fonctions -OH). L'ensemble est chauffé à 80 °C et maintenu à pression réduite de 20 mbar durant 1 heure pour déshydrater le polyéther polyol.

On introduit alors dans le réacteur maintenu à pression atmosphérique et porté à une température de 90°C :
- 4,2 mg d'un catalyseur de carboxylate de bismuth/zinc (Borchi^{®} Kat VP0244 de la société Borchers GmbH), et
- 6,52 g d'IPDI (soit : 58,3 mmol en fonctions -NCO),
les quantités introduites correspondant ainsi à un ratio NCO/OH égal à 2,7.

La réaction de polyaddition est poursuivie durant 4 heures, jusqu'à la consommation complète des fonctions hydroxyles du polyéther polyol, de manière donc à obtenir 92,04 g d'un produit qui est constitué d'au moins 99 % en poids d'un polyuréthanne (D) à groupe terminal -NCO et qui correspond à 37 mmol de fonctions -NCO.

La teneur en fonctions -NCO (exprimée en % poids/poids) du produit formé au cours de la réaction est donc suivie par titrage potentiométrique avec une amine, jusqu'à l'obtention de la valeur visée correspondante de 1,7 %.

### Etape (ii) : préparation du polyuréthanne (A) à groupe terminal silyl :

On introduit dans le réacteur en fin de l'étape i) 9,10 g de Geniosil^{®} XL 924 (masse molaire 245,4 g), correspondant donc à un ratio NCO/NHR² égal à 1.

Le réacteur est alors maintenu sous atmosphère inerte à 100 °C pendant 1 heure et demie jusqu'à réaction complète (détectée par la disparition de la bande -NCO à l'analyse Infra-rouge).

On obtient 99,90 gramme d'un produit translucide.

Sa viscosité à 23°C mesurée par un viscosimètre Brookfield RTV est de 65 Pa.s.

Le polyuréthanne (A) est alors soumis au test de sensibilité à l'humidité suivant.

### Test de sensibilité à l'humidité à 100 °C :

On introduit 10 g de polyuréthanne (A) dans un bécher de 50 ml avec 0,6 g d'eau que l'on place, après mélange, dans une étuve à 100°C.

On plonge ensuite à intervalle de temps régulier une spatule en bois dans le mélange obtenu, et l'on mesure la durée au bout de laquelle :
- soit il n'est plus possible de faire pénétrer la spatule en profondeur dans le mélange du fait de sa réticulation,
- soit, dans le cas où une pénétration superficielle de la spatule est encore possible, il n'y a plus de transfert dudit mélange sur la spatule lorsque celle-ci est retirée.

On mesure une durée de 4 minutes.

### 1.2. Préparation de la composition adhésive réticulable à chaud :

On utilise des particules de liège de taille comprise entre 100 µm et 4 mm ayant une humidité comprise entre environ 5 et 15 % et des microsphères expansibles d'un copolymère de méthacrylate de méthyle et d'acrylonitrile de taille comprise entre 10 µm et 200 µm.

On prépare 30 g d'une composition par ajout, dans un récipient en inox et dans l'ordre, des ingrédients suivants:
- 62,5 % de particules de liège
- 6,25 % de microsphères expansibles
- 31,25 % de polyuréthanne (A),
puis par simple malaxage à la main, jusqu'à obtention d'un mélange homogène.

### 1.3. Fabrication de l'article en aggloméré :

On utilise comme moule un cylindre en cuivre de diamètre intérieur 33 mm et de longueur 79 mm, dont on tapisse, au préalable, les parois internes par du papier siliconé et que l'on ferme à une de ses extrémités.

On transvase 10 g de la composition préparée précédemment dans ce cylindre, qui est ensuite fermé par son autre extrémité au moyen d'un piston.

Cette quantité de composition est comprimée au moyen d'un serre-joint selon une pression d'environ 0,6 bars, de manière à obtenir un volume fixe prédéterminé égal à 35,7 cm³.

On procède alors au chauffage de l'ensemble dans un four à une température de 110 °C et durant un temps de 50 minutes.

Après démoulage, on obtient un cylindre constitué d'un aggloméré solide, cohésif et d'aspect homogène.

Ce dernier est soumis, après 48 heures de stockage à température ambiante, au test de compression suivant.

### Test de compression :

Ce test est réalisé au moyen d'un dynamomètre comprenant 2 plaques horizontales parallèles de mêmes dimensions (20 cm x 10 cm) : une plaque rectangulaire fixe surmontée d'une plaque rectangulaire mobile.

L'aggloméré de particules de liège obtenu précédemment est placé, selon une génératrice du cylindre, sur la plaque inférieure fixe. La plaque supérieure mobile est alors abaissée selon un mouvement de translation effectué à une vitesse de 10 mm / minute, de manière à exercer une compression de 30 % mesurée selon le diamètre du cylindre.

La force appliquée pour exercer cette déformation est mesurée et est trouvée égale à 623 N.

La plaque mobile supérieure est ensuite relevée de manière à relâcher la contrainte exercée sur l'aggloméré et après 5 minutes de relaxation de ce dernier, on procède à la mesure de son diamètre et l'on calcule le retour élastique qui est défini comme la diminution du diamètre de l'aggloméré après compression et relaxation, exprimée en pourcentage sur la base du diamètre mesuré initialement avant compression.

On obtient un retour élastique de 97,2 %.

### Exemple 2 : Article en aggloméré de particules de liège

On répète la préparation du polyuréthanne (A) décrite à l'exemple 1.1. en remplaçant l'ACCLAIM^{®} 8200 par l'ACCLAIM^{®} 4200 (d'indice hydroxyle I_{OH} égal à 28 mg KOH par g) et en modifiant les caractéristiques indiquées dans le Tableau 1.

Les propriétés du polyuréthanne (A) ainsi obtenu sont également indiquées dans le Tableau 1.

On répète ensuite la préparation de la composition adhésive réticulable à chaud décrite à l'exemple 1.2., puis la fabrication de l'aggloméré décrite à l'exemple 1.3., en reprenant les caractéristiques indiquées dans le Tableau 2.

On obtient également un cylindre en aggloméré solide, cohésif et d'aspect homogène, dont les propriétés élastiques sont indiquées dans le Tableau 2.

### Exemple 3-6 : Articles en aggloméré de particules de liège

On répète l'exemple 1 conformément au Tableau 1 pour la préparation du polyuréthanne (A) et conformément au Tableau 2 pour la préparation de la composition adhésive réticulable à chaud et la fabrication de l'aggloméré correspondant.

Le Tableau 1 indique les propriétés du polyuréthanne (A) et le Tableau 2 indique celles de l'article en aggloméré solide, homogène et cohésif obtenu.

### Exemple 7 : Article en aggloméré de particules de caoutchouc

On utilise le même polyuréthanne (A) que celui de l'exemple 6 pour préparer une composition adhésive réticulable à chaud à base de particules de caoutchouc de taille comprise entre 1 et 12 mm, dont les composants sont indiqués dans le Tableau 2, lequel rassemble également les propriétés de l'article en aggloméré solide, homogène et cohésif obtenu.

### Exemple 8 : Article en aggloméré de particules de bois (farine de bois)

On utilise le même polyuréthanne (A) que celui de l'exemple 4 pour préparer une composition adhésive réticulable à chaud à base de farine de bois dont les composants sont indiqués dans le Tableau 2 où sont également rassemblées les propriétés de l'aggloméré solide et cohésif obtenu.

### Exemple de référence : Article en aggloméré de particules de liège utilisé comme bouchon

On répète l'exemple 1 en utilisant comme liant polyuréthanne un prépolymère polyuréthanne à terminaisons -NCO de poids moléculaire compris entre 10 et 30 kDa obtenu par une réaction de polyaddition d'un polyéther polyol avec un diisocyanate de faible masse moléculaire : un tel produit est disponible sous la dénomination QUIDUR^{®} 1007 auprès de la société Bostik SA dont la viscosité et la sensibilité à l'humidité sont indiquées dans le Tableau 1.

Les propriétés du bouchon obtenu sont indiquées dans le Tableau 2.

Il apparaît ainsi que les articles en aggloméré des exemples 1 à 6 présentent des propriétés de compressibilité/élasticité très proches de celles de l'exemple de référence, démontrant ainsi l'aptitude desdits articles à leur utilisation en tant que bouchon.

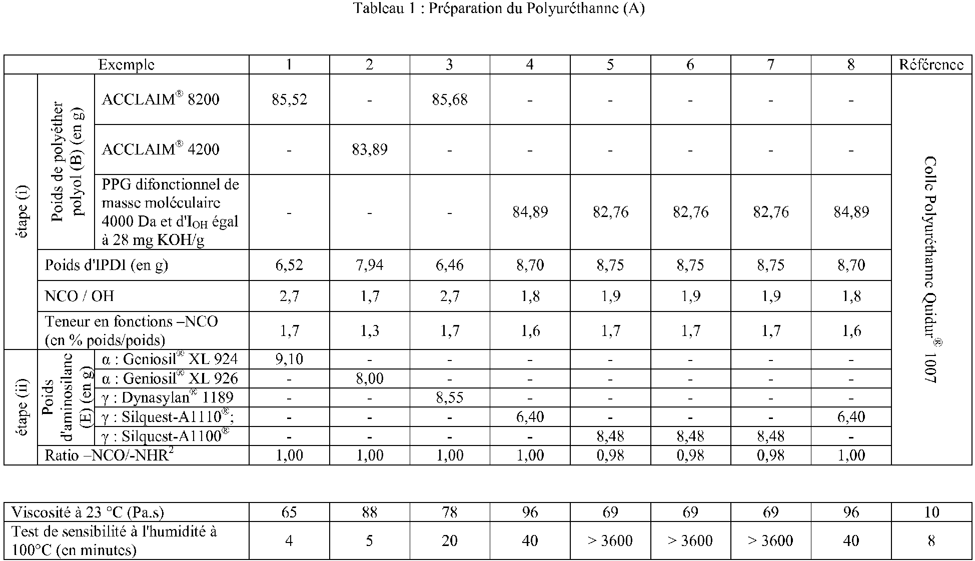

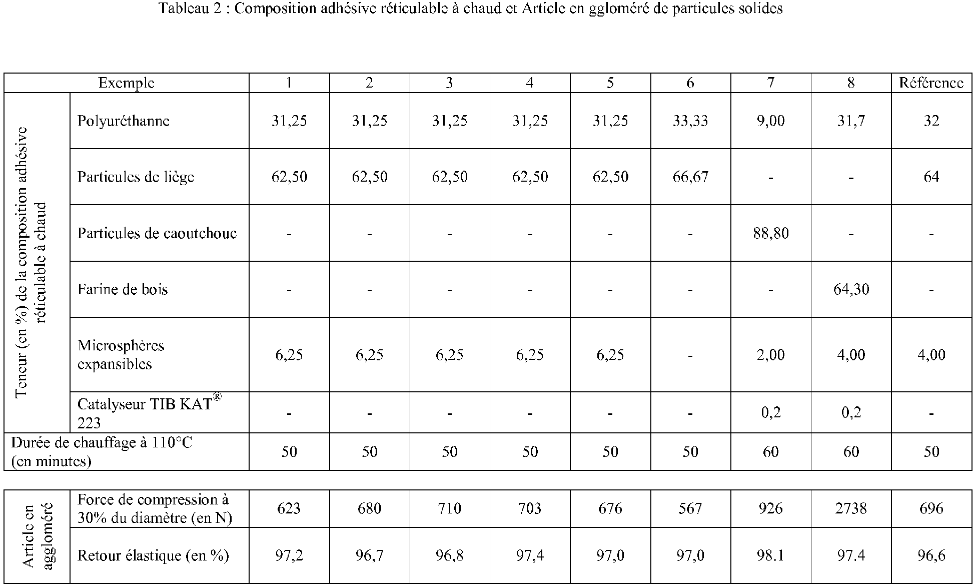

## Revendications

1. Composition adhésive réticulable à chaud comprenant:
(a) de 5 à 60 % d'un liant constitué par un polyuréthanne à groupe terminal silyl (A) obtenu par le procédé comprenant les étapes séquentielles :
- (i) de polyaddition d'une composition comprenant un polyéther polyol (B) avec un excès d'un diisocyanate (C), de manière à former un polyuréthanne (D) possédant au moins 2 groupes terminaux -NCO ; puis
- (ii) de réaction du produit de l'étape (i) avec une quantité stoechiométrique ou en excès d'un α, β ou γ aminosilane (E) ; et
(b) de 40 à 95 % de particules solides d'une matière organique ;
les pourcentages ci-dessus étant des pourcentages poids/poids relatifs au poids total de ladite composition.

2. Composition adhésive selon la revendication 1, **caractérisée en ce que** le polyéther polyol (B) est un polyéther polyol aliphatique ou aromatique, de masse moléculaire comprise entre 0,5 et 20 kDa et de fonctionnalité hydroxyle comprise entre 2 et 4,6.

3. Composition adhésive selon l'une des revendications 1 ou 2, **caractérisée en ce que** le polyéther polyol (B) est un polypropylène glycol.

4. Composition adhésive selon l'une des revendications 1 à 3, **caractérisée en ce que** le diisocyanate (C) a pour formule :
NCO-R¹-NCO (I)
dans laquelle R¹ représente un radical divalent aliphatique ou aromatique hydrocarboné comprenant de 5 à 15 atomes de carbone qui peut être linéaire, ramifié ou cyclique.

5. Composition adhésive selon l'une des revendications 1 à 4, **caractérisée en ce que** le diisocyanate (C) est l'IsoPhorone DiIsocyanate ou IPDI.

6. Composition adhésive selon l'une des revendications 1 à 5, **caractérisée en ce que** on fait réagir, dans l'étape (i), la composition comprenant le polyéther polyol (B) avec le diisocyanate (C), selon une quantité correspondant à un rapport équivalent -NCO/-OH allant de 1 à 4.

7. Composition adhésive selon l'une des revendications 1 à 6, **caractérisée en ce que** l'aminosilane (E) a pour formule :
R²-NH-CH₂-(CHR³)ₘ-(CH₂)ₙ-SiR⁴R⁵R⁶ (II)
dans laquelle :
- R² et R³, identiques ou différents, représentent un atome d'hydrogène ou un radical hydrocarboné aliphatique ou aromatique C₁-C₁₀ qui peut être linéaire, ramifié ou cyclique ;
- R⁴ représente un radical alkyle C₁-C₁₀, linéaire ou ramifié, ou a la même signification que R⁵ ou R⁶ ;
- R⁵ et R⁶, identiques ou différents, représentent un radical alkoxy linéaire ou ramifié C₁-C₈ ou un radical acyloxy C₁-C₈ ;
- m et n, identiques ou différents, représentent un nombre entier égal à 0 ou 1.

8. Composition adhésive selon la revendication 7, **caractérisée en ce que** l'aminosilane (E) est de type γ, correspondant à une formule (II) dans laquelle m=n=1.

9. Composition adhésive selon l'une des revendications 1 à 8, **caractérisée en ce que** la quantité d'aminosilane (E) mise à réagir avec le produit de l'étape (i) correspond à un rapport nombre de moles équivalent -NCO/nombre de moles de (E) allant de 0,95 à 1.

10. Composition adhésive selon l'une des revendications 1 à 9, **caractérisée en ce que** le polyuréthanne (A) présente une viscosité Brookfield mesurée à 23°C inférieure à 100 Pa.s.

11. Composition adhésive selon l'une des revendications 1 à 10, **caractérisée en ce que** la matière organique sous forme de particules solides présente une température de fusion supérieure à 150°C.

12. Composition adhésive selon l'une des revendications 1 à 11, **caractérisée en ce que** la matière organique sous forme de particules solides est choisie parmi une matière végétale ligneuse ou une matière à propriété élastomère.

13. Composition adhésive selon l'une des revendications 1 à 12, **caractérisée en ce que** les particules de matière organique sont des particules de liège.

14. Composition adhésive selon la revendication 13, **caractérisée en ce qu'**elle comprend :
(a) de 15 à 50 % du polyuréthanne à groupe terminal silyl (A) ;
(b) de 40 à 80 % de particules de liège ; et
(c) de 0 à 20 % d'une matière plastique à structure alvéolaire fermée.

15. Procédé de fabrication d'un article constitué d'un aggloméré de particules solides organiques à base d'un liant polyuréthanne réticulé comprenant:
- la mise en forme de la composition adhésive réticulable à chaud telle que définie dans l'une des revendications 1 à 14, puis
- sa réticulation par chauffage en présence d'eau à une température comprise entre 100 et 150°C.

16. Article susceptible d'être obtenu par le procédé tel que défini dans la revendication 15.

17. Article selon la revendication 16, **caractérisé en ce que** les particules solides de matière organique de la composition adhésive mise en oeuvre sont des particules de liège.

18. Utilisation de l'article selon la revendication 17 comme bouchon.
